(19)

Europäisches Patentamt
European Patent Office
Office européen des brevets

(11) **EP 1 600 433 B1**

(12) **EUROPEAN PATENT SPECIFICATION**

(45) Date of publication and mention of the grant of the patent:
**07.03.2012 Bulletin 2012/10**

(51) Int Cl.:
***C04B 37/00*** *(2006.01)*   ***B01D 39/20*** *(2006.01)*
***B01D 46/00*** *(2006.01)*

(21) Application number: **04700781.0**

(22) Date of filing: **08.01.2004**

(86) International application number:
**PCT/JP2004/000082**

(87) International publication number:
**WO 2004/063123 (29.07.2004 Gazette 2004/31)**

(54) **HONEYCOMB STRUCTURE**

WABENSTRUKTUR

STRUCTURE EN NID D'ABEILLES

(84) Designated Contracting States:
**DE FR**

(30) Priority: **08.01.2003 JP 2003002075**

(43) Date of publication of application:
**30.11.2005 Bulletin 2005/48**

(73) Proprietor: **NGK Insulators, Ltd.**
**Nagoya-City, Aichi Pref. 467-8530 (JP)**

(72) Inventors:
• **MASUKAWA, Naoshi**
**Nagoya-shi Aichi 267-8530 (JP)**

• **ICHIKAWA, Shuichi**
**Nagoya-shi Aichi 467-8530 (JP)**

(74) Representative: **Paget, Hugh Charles Edward**
**Mewburn Ellis LLP**
**33 Gutter Lane**
**London**
**EC2V 8AS (GB)**

(56) References cited:
**WO-A1-03/044338      JP-A- 2002 047 070**
**JP-A- 2002 085 922      JP-A- 2002 273 137**

**Description**

**Technical Field**

The present invention relates to a honeycomb structure used in a collecting filter for particulates in exhaust gas from an engine, a boiler or the like, more specifically, to a honeycomb structure in which a plurality of honeycomb segments are bonded and integrated together by use of a bonding material.

**Background Art**

Conventionally, various honeycomb filters are used for collecting particulates in exhaust gas exhausted from an engine of an automobile, a boiler or the like.

For example, a ceramic honeycomb structure called a DPF (diesel particulate filter) is used as a filter for collecting granular dust, such as graphite, which is contained in exhaust gas of a diesel car. This honeycomb structure includes a honeycomb ceramic structure provided with cells, which are a plurality of exhaust gas circulation holes surrounded by porous partition walls. The exhaust gas passes through the respective cells and moves to the adjacent cells through the porous partition walls on the way. At this time, particulates such as soot contained in the exhaust gas are collected by a filtering function of the partition walls. Moreover, the DPF is configured to recover the filtering function by burning and thereby removing the particulates collected by the partition walls.

In general, an exhaust gas filter for an automobile is deemed to require heat resistance because the temperature of exhaust gas flowing in the filter rises with time after starting an engine and reaches a high temperature. Particularly, in the case of the above-described DPF, strong heat shock resistance is required because a burning reaction upon recovery of the filtering function causes a rapid temperature rise. Moreover, upon this recovery, a local temperature rise is apt to occur and cracks attributable to heat stress tend to occur on a filter substrate.

Accordingly, in order to prevent occurrence of cracks on the filter substrate attributable to such heat stress, there is adopted a honeycomb structure formed by dividing a honeycomb filter into a plurality of honeycomb segments and then bonding and integrating the respective honeycomb segments together by use of a bonding material. In this structure, a bonding layer formed of the bonding material and provided between the respective honeycomb segments functions as a buffer material for the heat stress, thereby suppressing the occurrence of cracks.

Therefore, the bonding material used for forming this honeycomb structure integrating the plurality of honeycomb segments is required not to destroy the bonding layer when using the filter or, in other words, to have elasticity endurable for the heat stress occurring in use and to have high bonding strength. As the bonding material considering these properties, a bonding material made of inorganic fibers, inorganic binders, organic binders, and inorganic particles is known (Japanese Patent Publication No. 3121497). The inorganic fibers added to the bonding material impart elasticity to the bonding material, thereby suppressing the heat stress occurring in the honeycomb structure.

Meanwhile, there has been disclosed a technique to impart high heat conductivity and elasticity to a junction by use of a bonding material containing 10% by weight to 70% by weight of ceramic fibers which are inorganic fibers having lengths from 1 mm to 100 mm (Japanese Unexamined Patent Publication No. 2001 - 162119). Moreover, there has been disclosed a technique to improve adhesion strength and heat conductivity by use of a silicon carbide fibers instead of the inorganic particles and the ceramic fibers (Japanese Unexamined Patent Publication No. 2002 - 47070) and by use of a silane coupling agent, silica sol, organic binders, inorganic fibers and inorganic particles in the adhesive layer (Japanese Unexamined patent publication No. 2002-859 22).

Conventionally, in the case of using the bonding material with addition of the inorganic fibers as described above, in order to impart sufficient elasticity endurable for the heat stress to the bonding material and the bonding layer, which occurs in the course of using the filter in the manufacturing process or after completion, there is a recognition that it is more effective when the inorganic fibers added to the bonding material are longer and the content thereof is higher.

**Disclosure of the Invention**

In order to fabricate the honeycomb structure by bonding and integrating the plurality of honeycomb segments together, the bonding material is coated on an outer wall surface of the honeycomb segment, and another honeycomb segment is placed either on an upper surface or on a side surface thereof. Then, the adjacent honeycomb segments are bonded together by applying pressure from outside either individually or collectively to the plurality of pieces. Thereafter, the bonding material is dried and hardened.

As described previously, it has been conventionally recognized that it is more effective to prevent occurrence of cracks when the inorganic fibers contained in the bonding material are longer and the content thereof is higher.

However, as a result of analysis and investigation by the inventors of the present invention, there is a case where adhesion between the bonding material and the honeycomb segment placed thereon is deteriorated in the above-described bonding process if the inorganic fibers to be added to the bonding material become longer and the content becomes higher, , whereby a bonding force of the bonding layer between the honeycomb segments is significantly degraded.

An object of the present invention is to provide a honeycomb structure including a bonding layer which has a combination of necessary elasticity and high bonding strength, and to provide a manufacturing method thereof.

A honeycomb structure according to the present invention with the honeycomb structure of the invention, since the value of L × (W / D) / 100 is set equal to or above 0.5, it is possible to impart necessary elasticity to the bonding material and the bonding layer by adding the oxide fibers. Moreover, since the value of L × (W / D) / 100 is set equal to or below 8, the long oxide fibers are intertwined with one another three-dimensionally and an amount of spaces generated inside the bonding material is suppressed. Accordingly, it is possible to suppress dehydration speed to be accelerated by existence of these spaces. Therefore, it is possible to prevent degradation in bonding strength attributable to dryness on a surface of the bonding material.

Moreover, concerning the oxide fibers, mass percentage of the oxide fibers having a shape defined as $0.5 \leq$ [the diameter of the cross section perpendicular to the longitudinal direction] / [the length in the longitudinal direction] $\leq$ 1 is preferably set equal to or below 50% by mass. Furthermore, the mass percentage of the oxide fibers having the shape defined as $0.5 \leq$ [the diameter of the cross section perpendicular to the longitudinal direction] / [the length in the longitudinal direction] $\leq 1$ is set preferably equal to or below 10% by mass, or more preferably equal to or below 3% by mass.

Here, the bonding material may include also a colloidal oxide, while heat conductivity of the bonding layer is preferably set in a range from 0.1 to 5 W/m·K.

In addition, the honeycomb segment preferably includes silicon carbide or a silicon-silicon carbide compound material as a main ingredient.

A method of manufacturing a honeycomb structure according to an aspect of the present invention is set out in claim 7.

According to the manufacturing method of the present invention, it is possible to obtain the honeycomb structure of the present invention.

**Brief Description of the Drawings**

FIG. 1A is a perspective view showing a configuration of a honeycomb structure according to an embodiment of the present invention, and FIG. 1B is a cross-sectional view thereof.

FIG. 2A is a perspective view showing a configuration of a honeycomb segment according to the embodiment of the present invention, and FIG. 2B is a cross-sectional view thereof.

FIG. 3A to FIG. 3C are process drawings showing procedures of a bonding process according to the embodiment of the present invention.

FIG. 4A and FIG. 4B are schematic drawings for explaining an effect of a bonding material according to the embodiment of the present invention.

**Best Mode for Carrying Out the Invention**

Now, a honeycomb structure according to an embodiment of the present invention will be described with reference to the drawings.

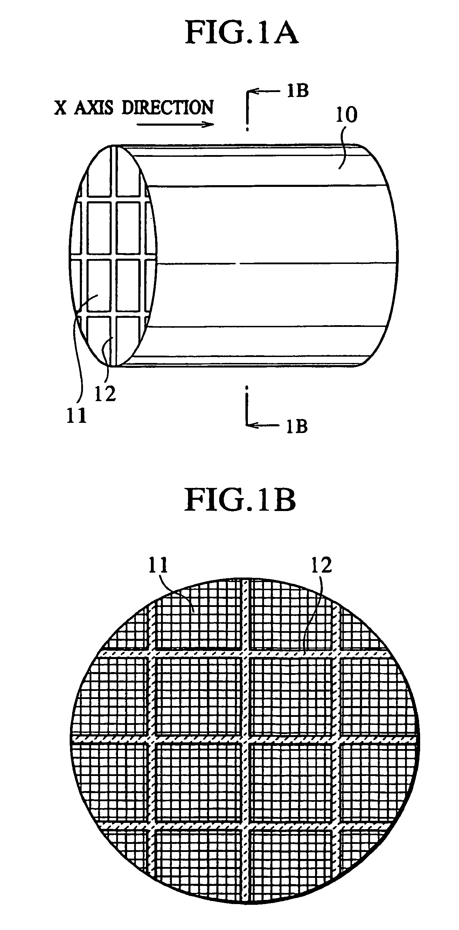

As shown in FIG. 1A and FIG. 1B, a honeycomb structure 10 according to this embodiment is a tubular honeycomb filter formed by bonding and integrating a plurality of honeycomb segments 11 together by use of a bonding layer 12.

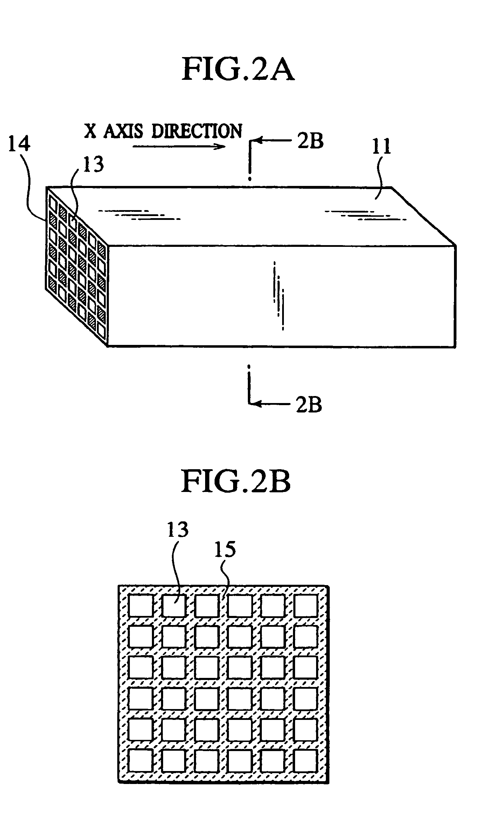

As shown in FIG. 2A and FIG. 2B, the honeycomb segment has a square prism contour, and includes a plurality of cells partitioned by porous partition walls 15 and constituting circulation holes penetrating in one axial direction (in an x-axis direction herein). Meanwhile, as shown in FIG. 2A, both end surface portions of the honeycomb segment 11 of the honeycomb structure applied to a DPF use are subjected to a sealing treatment so as to form a checkered pattern, in which open cells and sealed cells with open portions sealed with a sealing material 14 are arranged alternately in vertical and horizontal directions. The sealing treatment is performed such that the open cell on one of the end surfaces constitutes the sealed cell on the other end surface, and that the sealed cell on one of the end surfaces constitutes the open cell on the other end surface on the contrary.

By the structure described above, a process target fluid to be processed such as exhaust gas flowing in each of the cells is forced to move at least to the adjacent cell through the porous partition walls 15 in the course of passing the honeycomb structure 10, and granular substances such as soot contained in the fluid are collected on this occasion by a filtering action of the partition walls 15.

As described above, the honeycomb structure 10 according to the embodiment of the present invention is the honeycomb filter formed by bonding and integrating the plurality of honeycomb segments 11 together by use of the bonding layer 12, and in particular, a bonding material for forming the bonding layer 12 has a chief characteristic. Specifically, the bonding material according to the embodiment of the present invention is configured to suppress defective bonding attributable to dryness of a surface of the bonding material caused in a bonding process by optimizing an average fiber length and content percentage of contained oxide fibers, and to exert an effect to provide the bonding layer 12 with a strong bonding force in addition to elasticity.

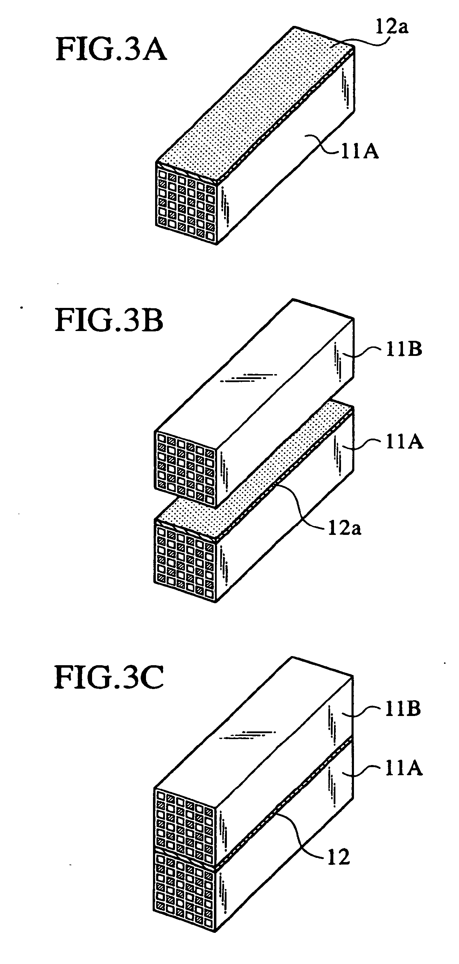

Now, the bonding material according to the embodiment of the present invention will be described concretely with reference to the bonding process. FIG. 3A to FIG. 3C are process drawings showing procedures of the bonding process for the honeycomb segments using the bonding material, in which a case of bonding two honeycomb segments is taken as an example.

In the bonding process, as shown in FIG. 3A, the bonding material which is a raw material of the bonding layer is firstly coated on an outer wall surface constituting a bonding surface of a honeycomb segment 11A, thereby forming a bonding material coating layer 12a in a thickness of about 0.5 mm to 3 mm, for example.

This bonding material is fabricated by adding water to inorganic particles, an aqueous solution of inorganic binders, and the oxide fibers. Moreover, it is also possible to add clay, organic binders, and the like when necessary. The inorganic particles function as aggregate while the inorganic binders function as an adhesive.

For example, a ceramic selected from the group consisting of silicon carbide (SiC), silicon nitride (SiNx), cordierite, alumina, mullite, zirconia, zirconium phosphate, aluminum titanate, titania, and a combination thereof, or a Fe-Cr-Al group metal, nickel group metal, a metal silicon (Si) - silicon carbide compound material or the like can be preferably used. It is preferable to use one having heat resistance, fine heat conductivity, and a thermal expansion coefficient equivalent to that of the honeycomb segment material. Here, it is most preferable to use silicon carbide.

Meanwhile, as the inorganic binders, it is possible to use oxide colloidal sol which is an aqueous solution of silica sol, alumina sol or the like.

As the oxide fibers, ceramic fibers such as aluminosilicate, mullite, silica or alumina can be preferably used. Here, these oxide fibers have sufficient heat resistance for use, and have lower melting points as compared to high melting-point non-oxide fibers such as silicon carbide. These oxide fibers are suitable for practical use because it is possible to process a fibrous material relatively easily and to control a material cost. Next, as shown in FIG. 3B, another honeycomb segment 11B is placed on the bonding material coating layer 12a. Although it is possible to coat the bonding material in advance on a bonding surface of the honeycomb segment 11B as well, it is preferable not to coat the bonding material in order to facilitate handling. After aligning the both honeycomb segments 11A and 11B, pressure in a range from 0.5 to 2 kg/cm$^3$, for example, is applied from outside in a perpendicular direction to the bonding surfaces.

Thereafter, the bonding material coating layer 12a is dried and hardened by heating at a temperature of about 200°C for about 5 hours, for example. In this way, the honeycomb structure formed by bonding and integrating the honeycomb segments 11A and 11B together through the bonding layer 12 is obtained as shown in FIG. 3C.

The procedures similar to FIG. 3A to FIG. 3C are also adopted in the case of bonding and integrating more honeycomb segments. Here, the pressurizing process may be performed in each case of stacking the honeycomb segment one-by-one. Alternatively, it is also possible to apply pressure collectively from outside after stacking a predetermined number of honeycomb segments or after stacking all the honeycomb segments.

Adhesion between the honeycomb segments is achieved in the pressurizing process. Moreover, the drying and hardening of the adhesive progress in the drying process to be performed subsequently, and bonding is thereby completed. Here, if a surface of the bonding material coating layer 12a is dried in this pressurizing process, the bonding force at an interface between the surface of the bonding material and the honeycomb segment 11B is significantly deteriorated.

The outer wall surface of the honeycomb segment 11A on which the bonding material is directly coated is made of the porous material, and therefore has an extremely hygroscopic structure. Accordingly, in the bonding process, dehydration inevitably progresses from the bonding material coating layer 12a toward the outer wall of the honeycomb segment 11A.

By the way, it has been conventionally understood that the bonding material has higher elasticity when containing longer inorganic fibers in a larger amount, and that the bonding material exerts higher effects to suppress occurrence of cracks in the course of drying in the manufacturing process and to alleviate heat stress in actual use.

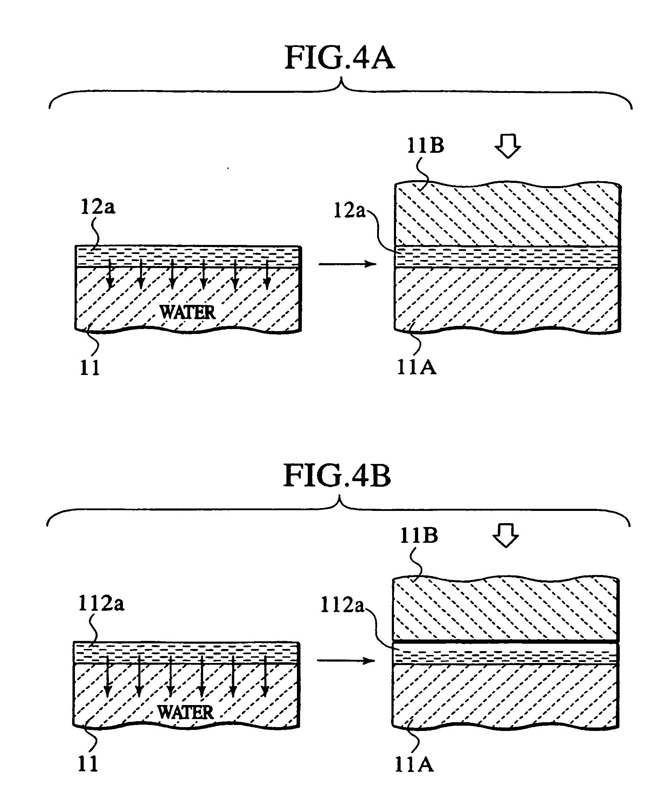

However, according to investigation by the inventors of the present invention, it has been made clear that the bonding strength of the bonding material was deteriorated in the case of using the conventional bonding material containing a larger amount of longer oxide fibers, and that separation was apt to occur at an interface between the conventional bonding layer and the honeycomb segment placed thereon. Moreover, as shown in FIG. 4B, it has been also confirmed that a factor causing above problem was fast dehydration speed from a bonding material coating layer 112a toward the outer wall of the honeycomb segment 11A, which dried a surface of the bonding material coating layer 112a in the pressurizing process.

In addition, the inventors of the present invention analyzed a relation between the dehydration speed of this bonding material and the structure of the bonding material, and obtained a finding that it was not possible to develop the sufficient bonding force of the bonding material due to the reasons that numerous spaces are generated in the bonding material containing the higher amount of the longer oxide fibers due to the long oxide fibers intertwining three-dimensionally with one another, that existence of the spaces accelerates movement of water inside the bonding material, and that the dehydration speed is accelerated and the surface of the bonding material coating layer 112a is dried in a short time as a consequence..

The bonding material 12 according to the embodiment of the present invention has been obtained based on the above-described finding, which has a chief characteristic to satisfy the following relational expression (1):

$$0.5 \leq L \times (W / D) / 100 \leq 8 \qquad\qquad (1)$$

in which L denotes an average length ($\mu$m) of the oxide fibers in a longitudinal direction, D denotes specific gravity (g/cm$^3$) of the oxide fibers, and W denotes mass percentage of content (% by mass) of the oxide fibers in the entire bonding material.

That is to say, by satisfying the above-described relational expression (1) and by optimizing the average length L in the longitudinal direction of the oxide fibers constituting a factor to generate the spaces in the bonding material and optimizing a value W/D corresponding to a volume ratio of the oxide fibers, which is obtained by dividing the mass percentage of content (W) by the specific gravity (D), the bonding material 12 according to the embodiment of the present invention is able to impart necessary elasticity to the bonding material, to suppress generation of the spaces in the bonding material, to suppress acceleration of the dehydration speed in the bonding process as shown in FIG. 4B, and to provide a fine bonding force.

Generation of the spaces attributable to the oxide fibers becomes more apparent as the oxide fibers are longer and the volume ratio thereof is higher. Accordingly, not only the average length L of the oxide fibers but also the value W/D are adjusted, whereby the spaces of the oxide fibers in the bonding material constituting the factor for accelerating the dehydration speed can be sufficiently reduced when the relational expression $L \times (W / D) / 100 \leq 8$ is satisfied. Therefore, it is possible to suppress the excessive acceleration of dehydration in the bonding process, to prevent the surface of the bonding material from drying, to obtain a fine adhesion property, and to provide high bonding strength which can endure heat stress in actual use.

Meanwhile, by satisfying the relation expression $0.5 \leq L \times (W / D) / 100$, it is possible to impart the necessary elasticity to the bonding material. Accordingly, it is possible to impart a function as a stress buffer layer for preventing occurrence of cracks in the manufacturing process and in actual use.

Preferably, it is desirable that the bonding material satisfies the following relational expression (2):

$$0.7 \leq L \times (W / D) / 100 \leq 7 \qquad\qquad (2)$$

Moreover, in order to prevent defective bonding attributable to dehydration more reliably and to develop the stress buffer effect in actual use, it is preferable to satisfy the following relational expression (3):

$$1 \leq L \times (W / D) / 100 \leq 6 \qquad\qquad (3)$$

In terms of the above-described relational expressions (1) to (4), when focusing more attention on the shapes of the oxide fibers, the oxide fibers contained in the bonding material and the bonding layer have an average cross-sectional diameter in a range of 1 to 20 $\mu$m and the average length in a range from 10 to 100 $\mu$m. Here, the average cross-sectional diameter means an average diameters of the cross-sectional diameters in a perpendicular direction to the longitudinal direction of the oxide fibers. Meanwhile, the average length means an average of the lengths of the oxide fibers in the longitudinal direction.

If the average cross-sectional diameter of the oxide fibers is below 1 $\mu$m, a degree of shrinkage becomes large when drying the bonding material. Accordingly, cracks occur and it is not possible to impart the elasticity. On the contrary, if the average cross-sectional diameter of the oxide fibers is above 20 $\mu$m, there is a large influence to the thickness of the bonding material. Accordingly, it is difficult to coat the bonding material uniformly on the outer wall surface of the honeycomb segment.

Meanwhile, if the average length of the oxide fibers is below 10 $\mu$m, the degree of shrinkage becomes large when drying the bonding material. Accordingly, cracks are apt to occur and it is not possible to impart the elasticity. On the contrary, if the average length is above 100 $\mu$m, a large amount of water is required to obtain coatable paste. The use of the large amount of water results in large shrinkage when drying the bonding material and induces occurrence of cracks.

The average cross-sectional diameter of the oxide fibers is set more preferably in a range from 3 to 15 $\mu$m, or most preferably in a range from 5 to 10 $\mu$m. Meanwhile, the average length of the oxide fibers is set more preferably in a range from 10 to 80 $\mu$m, or most preferably in a range from 20 to 60 $\mu$m.

Incidentally, in this embodiment, apart from literally fibrous oxide fibers having long shapes in one axial direction, the oxide fibers contained in the bonding material and the bonding layer also include coarse particles called shots in approximately spherical shapes or in amorphous shapes which failed to form fibrous shapes in the manufacturing process of the oxide fibers. The property to impart the elasticity to the bonding material and the bonding layer is limited to the oxide fibers having the longitudinal shapes. The shots contained therein at the same time have very little positive contribution in terms of the stress buffer of the bonding material or in terms of strengthening the bonding force. Instead, the shots inhibit dehydration locally and incur imbalance in the dehydrated state in the bonding process, and there is a concern of occurrence of cracks when drying the bonding material.

Therefore, in order to prevent inconvenience concerned by existence of these shots, it is preferable to use an oxide fiber material having the content of the coarse particles satisfying a relational expression 0.5 $\leq$ (the diameter of the cross section perpendicular to the longitudinal direction) / (the length in the longitudinal direction) $\leq$ 1 in an amount equal to or below 50% by mass. Here, in terms of the coarse particles in approximately spherical shapes, the longitudinal direction may be an arbitrary direction.

In order to remove the influence of the shots more reliably, it is desirable to use the oxide fiber material having the content of the coarse particles satisfying the relational expression 0.5 $\leq$ (the diameter of the cross section perpendicular to the longitudinal direction) / (the length in the longitudinal direction) $\leq$ 1 preferably in an amount equal to or below 10% by mass, or more preferably in an amount equal to or below 3% by mass.

Here, in order to reduce the content of the shots in the oxide fibers, it is possible to adopt a method of removing the coarse particles by screening the manufactured oxide fibers and performing a classification process, for example.

The oxide fibers need to be contained in the bonding material in the percentage from 10% to 50% by mass. The content is set more preferably in a range from 15% to 45% by mass, or most preferably in a range from 20% to 40% by mass. Because if the content is below 10% by mass, the degree of shrinkage becomes large when drying the bonding material. Accordingly, cracks occur and it is not possible to impart the elasticity. On the contrary, if the content is above 50% by mass, the heat conductivity is reduced.

Moreover, the heat conductivity of the bonding layer 12 formed by use of the bonding material is set preferably in a range from 0.1 to 5 W/m·K or more preferably in a range from 0.2 to 3 W/m·K. Because the heat conductivity below 0.1 W/m·K is undesirable since heat transfer is inhibited and the temperature in the honeycomb structure becomes uneven. The heat conductivity above 5 W/m·K is undesirable due to a risk of deterioration in the bonding strength and to a difficulty in production.

The above-described adjustment of the heat conductivity of the bonding layer 12 is performed in accordance with the following method, for example. To increase the heat conductivity of the bonding layer 12, it is effective to increase the content of the inorganic particles in the bonding material, in particular, the content of silicon carbide preferably. On the other hand, to reduce the heat conductivity of the bonding layer 12, it is effective to increase the content of the oxide fibers or the inorganic binders in the bonding material.

Meanwhile, as for the thermal expansion coefficient of the bonding layer 12, it is preferable to have a thermal expansion coefficient close to that of the honeycomb segment in order to prevent occurrence of cracks due to heat shock and the like. Moreover, the thermal expansion coefficient is preferably set low in order to prevent occurrence of heat stress attributable to unevenness in the temperature. From this point of view, the thermal expansion coefficient of the bonding layer is set preferably in a range from $1 \times 10^{-6}$ to $8 \times 10^{-6}$ /°C, more preferably in a range from $1.5 \times 10^{-6}$ to $7 \times 10^{-6}$ /°C, or most preferably in a range from $2 \times 10^{-6}$ to $6 \times 10^{-6}$ /°C.

The above-described adjustment of the thermal expansion coefficient of the bonding layer 12 is performed in accordance with the following method, for example.

To increase the thermal expansion coefficient of the bonding layer 12, it is effective to increase the content of the inorganic particles in the bonding material, in particular, the content of silicon carbide preferably. On the other hand, to reduce the thermal expansion coefficient of the bonding layer 12, it is effective to increase the content of the oxide fibers or the inorganic binders in the bonding material.

Now, the configuration of the honeycomb structure according to the embodiment of the present invention other than the bonding layer will be described below.

A cross-sectional shape of the honeycomb structure is not particularly limited. In addition to the circular shape as shown in FIG. 1B, it is possible to adopt various aspects including an oval shape, a race track shape, a regular polygon shape, and other irregular shapes.

As for the main ingredient of the numerous honeycomb segments constituting the honeycomb structure, in light of strength and heat resistance, it is preferable to use a material including one kind or a combination of multiple kinds selected from the group consisting of cordierite, mullite, alumina, spinel, silicon carbide, a silicon carbide - cordierite compound material, a silicon - silicon carbide compound material, silicon nitride, lithium aluminum silicate, aluminum titanate, and Fe-Cr-Al group metal.

Meanwhile, the heat conductivity of the honeycomb segments is set preferably in a range from 10 to 60 W/m·K, more preferably in a range from 15 to 65 W/m·K, or most preferably in a range from 20 to 50 W/m·K. From this point of view, silicon carbide or a silicon - silicon carbide compound material is particularly suitable.

Cell density of the honeycomb segments, that is, the number of circulation holes per unit cross-sectional area is not particularly limited. However, if the cell density is too small, an effective geometric surface area (GSA) as a filter is deficient and the strength is also reduced. On the contrary, if the cell density is too large, a pressure loss is increased when the process target fluid flows. Therefore, the cell density is set preferably in a range from 6 to 2000 cells/in$^2$ (0.9 to 311 cells/cm$^2$), more preferably in a range from 50 to 1000 cells/in$^2$ (7.8 to 155 cells/cm$^2$), or most preferably in a range from 100 to 400 cells/in$^2$ (15.5 to 62.0 cells/cm$^2$). Meanwhile, the shape of the cell, that is, the cross-sectional shape of the open portion is not particularly limited. However, it is preferable to use a shape which is easy to fabricate, such as a triangular shape, a square shape, a hexagonal shape, or a corrugated shape.

The partition walls of the honeycomb segments are preferably made of a porous body which can realize the filtering function. The thickness of the partition walls is not particularly limited. If the partition walls are too thick, the pressure loss becomes too large when the process target fluid passes through the porous partition walls. If the partition walls are too thin, it is undesirable because the strength as the filter is deficient. Therefore, the thickness of the partition walls is set in a range from 30 to 2000 μm, preferably in a range from 40 to 1000 μm, or even more preferably in a range from 50 to 500 μm.

In addition, the size of the honeycomb segments is not particularly limited. However, if the size is too large, the number of the honeycomb segments for constituting one honeycomb structure is reduced, whereby the effect of heat stress relaxation by forming the segments is not obtained, and a problem of breakage is apt to occur. On the contrary, if the size is too small, the number of production steps associated with manufacturing and bonding of the honeycomb segments is increased and a burden of production is thereby increased. Therefore, the cross-sectional area of the honeycomb segment is set in a range from 900 to 10000 mm$^2$, preferably in a range from 900 to 5000 mm$^2$, or even more preferably in a range from 900 to 3600 mm$^2$.

The shape of the honeycomb segment is not particularly limited. In light of ease of carrying out the manufacturing process, it is preferable to apply a regular polygonal prism such as a square prism-shape as shown in FIG. 2A.

Meanwhile, when the honeycomb structure according to this embodiment is used as a DPF, it is preferable to perform sealing on the end surfaces of the honeycomb structure, such that the adjacent cells are alternately sealed on mutually opposite end surfaces to form the checkered pattern as shown in FIG. 2A. A ceramic material and the like can be used as a sealing material for sealing the cells.

Moreover, when the honeycomb structure according to this embodiment is used for the purpose of purifying exhaust gas from an engine or a burning system such as a boiler or for the purpose of modifying liquid fuel or gas fuel, it is preferable to allow inner wall surfaces of the respective cells to support a catalyst. As for this catalyst, it is possible to use noble metal such as Pt, Pd or Rh used as a three-way catalyst, for example.

Next, the method of manufacturing the honeycomb structure according to this embodiment will be described. Since the bonding process has been described already, explanation on that part will be simplified.

Firstly, the honeycomb segment is fabricated. To be more precise, methylcellulose and hydroxyproxy methylcellulose (hydroxypropoxy methylcellulose) are added to raw material powder for the main ingredient of the honeycomb segment such as cordierite, mullite, alumina, spinel, silicon carbide, a silicon carbide - cordierite compound material, a silicon - silicon carbide compound material, silicon nitride, lithium aluminum silicate, aluminum titanate or Fe-Cr-Al group metal. Moreover, a surfactant and water are added to fabricate a plastic body. By subjecting this body to extrusion molding to fabricate a honeycomb segment compact including numerous cells penetrating in one axial direction is formed. Upon extrusion molding, it is possible to use a plunger type extruder, a biaxial screw type continuous extruder, and the like. It is possible to carry out the body forming process and the molding process continuously by use of the biaxial screw type continuous extruder.

The honeycomb segment compact is dried by use of microwaves or hot wind, for example. Thereafter, when using the honeycomb segment as the DPF, a plugging process is performed such that the adjacent cells are alternately plugged on mutually opposite end surfaces to form the checkered pattern as shown in FIG. 2A. This plugging process is performed by selectively masking only end surfaces of the open portions of the cells not subject to plugging, and then by coating slurry of plugging material on the end surfaces of the honeycomb segments.

Thereafter, the honeycomb segment compact is subjected to firing. A firing temperature, a firing atmosphere, and firing time are appropriately changed depending on the material used therein. For example, when silicon carbide (SiC) powder and metal silicon (Si) powder were used as the materials for the main ingredients of the honeycomb segment, the honeycomb segment compact is heated in an air atmosphere or in a N2 atmosphere. After degreasing, the firing process is performed in an Ar atmosphere at a temperature in a range from about 1400°C to 1800°C, thereby obtaining the honeycomb segment including the porous partition walls in which SiC crystal grains are bonded by Si.

Subsequently, the plurality of honeycomb segments are bonded and integrated together in accordance with the procedures shown in FIG. 3A to FIG. 3C by use of the above-described bonding material according to this embodiment.

Moreover, an outer periphery of a stacked body of the plurality of honeycomb segments thus bonded and integrated together is cut off and the stacked body is processed into a predetermined cross-sectional shape. After processing, a coating material including ceramic particles is coated on the outer periphery to form an outer wall. Here, this coating material preferably includes ceramic particles such as silicon carbide, colloidal silica, colloidal alumina, ceramic fibers, and moreover, inorganic binders and organic binders. The honeycomb structure according to the embodiment of the present invention can be obtained by performing drying and heating processes after coating the coating material.

Here, it is also possible to support catalyst by coating catalyst slurry on this honeycomb structure, then drying and firing the honeycomb structure as appropriate.

**Examples**

Now, examples of the honeycomb structure of the present invention will be described.

(Fabrication of the honeycomb segment)

As the materials for the honeycomb segment, SiC powder and metal Si powder were blended at a ratio of 80 to 20 by mass, then starch and resin foam were added as pore-forming agents, and then methylcellulose and hydroxypropoxy methylcellulose, a surfactant, and water were added to fabricate a plastic body. This body was subjected to extrusion molding and to drying by use of microwaves and hot wind, thereby obtaining a honeycomb segment compact having the thickness of the partition walls at 310 $\mu$m, the cell density of about 46.5 cells/cm$^2$ (300 cells/in$^2$), the cross section in a square shape 35 mm on a side, and the length of 152 mm.

Concerning this honeycomb segment compact, both end surfaces of the circulation holes (the cells) were sealed so as to form the checkered patterns on the both surfaces. That is, the plugging process was performed such that the adjacent cells are sealed alternately on mutually opposite end surfaces. A material similar to the honeycomb segment material was used as the plugging material. After plugging and drying the both end surfaces of the circulation holes (the cells), the honeycomb segment compact was subjected to degreasing in an air atmosphere at about 400°C, and was then fired in an Ar inert atmosphere at about 1450°C, thereby obtaining a honeycomb segment having a porous structure in which SiC crystal grains were bonded by Si.

(Preparation of the bonding material)

Water was added to a mixture including SiC powder as the inorganic particles, aluminosilicate fibers (specific gravity D= 2.73 g/cm$^3$) as the oxide fibers, and aqueous solution of silica gel at 40% by mass and clay as inorganic binders. Then the mixture was kneaded with a mixer for 30 minutes, and a bonding material in paste form was fabricated. To be more precise, nine types of bonding materials (bonding materials 1 to 9) having different composition ratios were fabricated under the conditions shown in Table 1.

(Example 1)

A process of coating the bonding material 1 in the thickness of about 1 mm on an outer wall surface of a honeycomb segment and then placing another honeycomb segment thereon was repeated to fabricate a honeycomb segment stacked body made of 16 honeycomb segments. After bonding and integrating the entire stacked body together by applying pressure from outside, the stacked body was dried at 200°C for 5 hours. Then the outer periphery was cut off into a tubular shape and the coating material was coated thereon. In this way, a honeycomb structure of Example 1 was obtained.

The fabricated honeycomb structure was cut off, and a portion of the bonding layer was observed with an optical microscope. In this way, occurrence of cracks at the junction was evaluated. Meanwhile, a prescribed sample for a strength test was cut out of the fabricated honeycomb structure, and bonding strength was measured by a three-point bending method in accordance with JIS R1601. The result is shown in Table 2. In the case of the honeycomb structure of Example 1, extremely fine bonding strength was obtained without occurrence of cracks.

(Examples 2 to 4 and Comparative Examples 1 to 4)

Honeycomb structures of Examples 2 to 4 were fabricated by procedures similar to Example 1 while using the bonding materials 2 to 5, respectively. Moreover, honeycomb structures of Comparative Examples 1 to 4 were fabricated by procedures similar to Example 1 while using the bonding materials 6 to 9, respectively. Occurrence of cracks at the bonding layers and bonding strength of the honeycomb structures in the respective examples and comparative examples were shown in Table 2.

(Results)

As it is apparent from the result shown in Table 2, cracks occurred in the bonding layers in Comparative Example 1 and Comparative Example 3 using the bonding material 6 and the bonding material 8 each having the value of ($L \times (W/D) / 100$) below 0.5 in terms of the composition of the aluminosilicate fibers which are the oxide fibers in the bonding materials. Accordingly, the bonding layers could not exert sufficient elasticity. It is conceivable that these bonding layers failed to relax the stress generated in the manufacturing process.

Meanwhile, in Comparative Example 2 and Comparative Example 4 using the bonding material 7 and the bonding material 9 each having the value of ($L \times (w/D) / 100$) in excess of 8 showed extremely poor bonding strength and detachment occurred between the bonding layer and the outer wall surface of the honeycomb segment placed on the bonding layer. This tendency showed an aspect of deterioration in bonding strength attributable to the dried surface of the bonding material.

On the contrary, in Examples 1 to 5 using the bonding materials 1 to 5 each satisfying the condition of the value of ($L \times (W/D) / 100$) in the range from 0. 5 to 8 inclusive, occurrence of cracks was not found and bonding strength was favorable.

Table 1

| Bonding Material No. | Aluminosilicate (Oxide Fibers) Average Length L($\mu$m) | Aluminosilicate (Oxide Fibers) Average Cross-sectional Diameter d ($\mu$m) | Content of Shots in Aluminosilicate (Oxide Fibers) (% by mass) | Content of Aluminosilicate in Bonding Material W (% by mass) | L$\times$(W/D)/100 | Content of SiC Powder in Bonding Material (% by mass) | Content of Silica Gel in Bonding Material (% by mass) | Content of Clay in Bonding Material (% by mass) | Content of Water in Bonding Material (% by mass) |
|---|---|---|---|---|---|---|---|---|---|
| 1 | 50 | 5 | 1 | 25 | 4.6 | 42 | 22 | 1 | 10 |
| 2 | 90 | 17 | 1 | 22 | 7.3 | 42 | 22 | 1 | 13 |
| 3 | 20 | 2 | 1 | 14 | 1 | 49 | 24 | 1 | 12 |
| 4 | 50 | 5 | 7 | 25 | 4.6 | 42 | 22 | 1 | 10 |
| 5 | 50 | 5 | 25 | 25 | 4.6 | 42 | 23 | 1 | 9 |
| 6 | 20 | 2 | 1 | 4 | 0.29 | 57 | 29 | 1 | 9 |
| 7 | 80 | 17 | 1 | 30 | 8.8 | 36 | 18 | 1 | 15 |
| 8 | 7 | 1 | 1 | 10 | 0.26 | 51 | 25 | 1 | 13 |
| 9 | 150 | 25 | 1 | 19 | 10.4 | 45 | 15 | 1 | 20 |

Table 2

| | No. of Used Bonding Material | Appearance of Bonding Layer | Bonding Strength (MPa) |
|---|---|---|---|
| Example 1 | 1 | no cracks | 3.5 |
| Example 2 | 2 | no cracks | 2.7 |
| Example 3 | 3 | no cracks | 2.6 |
| Example 4 | 4 | no cracks | 3.2 |
| Example 5 | 5 | no cracks | 2.4 |
| Comparative Example 1 | 6 | cracks observed | - |
| Comparative Example 2 | 7 | no cracks | 0.5 |
| Comparative Example 3 | 8 | cracks observed | - |
| Comparative Example 4 | 9 | no cracks | 0.3 |

The honeycomb structure of the present invention has been described along with the embodiment and the examples. However, the present invention is not limited to the description of the embodiment and the examples.

According to the honeycomb structure of the present invention, it is possible to impart elasticity for preventing occurrence of cracks, to suppress generation of spaces attributable to oxide fibers, and to prevent defective bonding attributable to a dried surface of a bonding material. Accordingly, the present invention can provide a honeycomb structure having fine bonding strength.

**Claims**

1. A honeycomb structure comprising:

a plurality of honeycomb segments (11) each partitioned by partition walls (15) and having a plurality of circulation holes penetrating in one axial direction; and
a bonding layer (12) existing between the adjacent honeycomb segments (11) for bonding the plurality of honeycomb segments (11),
wherein the bonding layer (12) is formed by use of a bonding material including oxide fibers, inorganic particles and inorganic binder, the oxide fibers satisfying the following relational expression (1),

$$0.5 \leq L \times (W / D) / 100 \leq 8 \qquad (1)$$

in which L is an average length ($\mu$m) of the oxide fibers in a longitudinal direction, D is specific gravity (g/cm$^3$) of the oxide fibers, and W is mass percentage of content (% by mass) of the oxide fibers in the entire bonding material, and
wherein the average length L in the longitudinal direction of the oxide fibers is in the range from 10 to 100 $\mu$m, the average diameter d of the oxide fibers in a cross-section perpendicular to the longitudinal direction thereof is in the range from 1 to 20 $\mu$m, and
the value of W is in the range from 10 to 50%.

2. A honeycomb structure according to claim 1,
wherein mass percentage of the oxide fibers having a shape defined as $0.5 \leq$ (a diameter of a cross section perpendicular to the longitudinal direction) / (a length in the longitudinal direction) $\leq 1$ is equal to or below 50% by mass in the oxide fibers.

3. A honeycomb structure according to claim 2,
wherein the mass percentage of the oxide fibers having the shape defined as $0.5 \leq$ (the diameter of the cross section perpendicular to the longitudinal direction) / (the length in the longitudinal direction) $\leq 1$ is equal to or below 10% by mass.

4. A honeycomb structure according to any one of claim 1 through claim 3, wherein the bonding material comprises also a colloidal oxide.

5. A honeycomb structure according to any one of claim 1 through claim 4, wherein heat conductivity of the bonding layer is in a range from 0.1 to 5 W/m·K.

6. A honeycomb structure according to anyone of claim 1 through claim 5, wherein the honeycomb segment comprises silicon carbide or a silicon-silicon carbide compound material as a main ingredient.

7. A method of manufacturing a honeycomb structure comprising the steps of:

forming a plurality of honeycomb segments (11) each partitioned by partition walls (15) and having a plurality of circulation holes penetrating in one axial direction; and
bonding the plurality of honeycomb segments (11) by use of a bonding material (12) including oxide fibers, inorganic particles and inorganic binder, the oxide fibers satisfying the following relational expression (1),

$$0.5 \leq L \times (W / D) / 100 \leq 8 \qquad (1)$$

in which L is an average length ($\mu$m) of the oxide fibers in a longitudinal direction, D is specific gravity (g/cm$^3$) of the oxide fibers, and W is mass percentage of content (% by mass) of the oxide fibers in the entire bonding material, and
wherein the average length L in the longitudinal direction of the oxide fibers is in the range from 10 to 100 $\mu$m, the average diameter d of the oxide fibers in a cross-section perpendicular to the longitudinal direction thereof is in the range from 1 to 20 $\mu$m, and
the value of W is in the range from 10 to 50%.

**Patentansprüche**

1. Wabenstruktur, die Folgendes umfasst:

eine Vielzahl an Wabensegmenten (11), die jeweils durch Trennwände (15) geteilt sind und eine Vielzahl an Zirkulationslöchern aufweisen, die in eine axiale Richtung durch diese hindurch verlaufen; und
eine Bindungsschicht (12), die zwischen benachbarten Wabensegmenten (11) vorliegt, um die Vielzahl an Wabensegmenten (11) haftschlüssig zu verbinden,
wobei die Bindungsschicht (12) unter Verwendung eines Bindematerials, das Oxidfasern, anorganische Partikel und ein anorganisches Bindemittel umfasst, gebildet wird, wobei die Oxidfasern folgendes Verhältnis (1) erfüllen:

$$0,5 \leq L \times (W/D) / 100 \leq 8 \qquad (1),$$

worin L eine durchschnittliche Länge ($\mu$m) der Oxidfasern in Längsrichtung ist, D die spezifische Dichte (g/cm$^3$) der Oxidfasern ist und W der Massenanteil des Gehalts (Gew.-%) der Oxidfasern in dem gesamten Bindematerial ist, und
worin die mittlere Länge L der Oxidfasern in Längsrichtung im Bereich von 10 bis 100 $\mu$m liegt, der mittlere Durchmesser d der Oxidfasern in einem Querschnitt im rechten Winkel auf die Längsrichtung im Bereich von 1 bis 20 $\mu$m liegt und
der Wert von W im Bereich von 10 bis 50 % liegt.

2. Wabenstruktur nach Anspruch 1, worin der Massenanteil der Oxidfasern mit einer Form, die als 0,5 $\leq$ (Durchmesser eines Querschnitts im rechten Winkel auf die Längsrichtung)/(Länge in Längsrichtung) $\leq$ 1 definiert ist, 50 Gew.-% der Oxidfasern oder weniger beträgt.

3.  Wabenstruktur nach Anspruch 2,
    worin der Massenanteil der Oxidfasern mit einer Form, die als 0,5 ≤ (Durchmesser eines Querschnitts im rechten Winkel auf die Längsrichtung)/(Länge in Längsrichtung) ≤ 1 definiert ist, 10 Gew.-% der Oxidfasern oder weniger beträgt.

4.  Wabenstruktur nach einem der Ansprüche 1 bis 3,
    worin das Bindematerial auch ein kolloidales Oxid umfasst.

5.  Wabenstruktur nach einem der Ansprüche 1 bis 4,
    worin die Leitfähigkeit der Bindeschicht im Bereich von 0,1 bis 5 W/m·K liegt.

6.  Wabenstruktur nach einem der Ansprüche 1 bis 5,
    worin das Wabensegment ein Material aus Silicumcarbid oder aus einer Silicium-Siliciumcarbid-Verbindung als Hauptinhaltsstoff umfasst.

7.  Verfahren zur Herstellung einer Wabenstruktur, das folgende Schritte umfasst:

    die Ausbildung einer Vielzahl an Wabensegmenten (11), die jeweils durch Trennwände (15) geteilt sind und eine Vielzahl an Zirkulationslöchern aufweisen, die in eine axiale Richtung durch diese hindurch verlaufen; und das haftschlüssige Verbinden der Vielzahl an Wabensegmenten (11) unter Verwendung eines Bindematerials (12), das Oxidfasern, anorganische Partikel und ein anorganisches Bindemittel umfasst, wobei die Oxidfasern folgendes Verhältnis (1) erfüllen:

    $$0{,}5 \leq L \times (W/D) / 100 \leq 8 \qquad (1),$$

    worin L eine durchschnittliche Länge ($\mu$m) der Oxidfasern in Längsrichtung ist, D die spezifische Dichte (g/cm$^3$) der Oxidfasern ist und W der Massenanteil des Gehalts (Gew.-%) der Oxidfasern in dem gesamten Bindematerial ist, und
    worin die mittlere Länge L der Oxidfasern in Längsrichtung im Bereich von 10 bis 100 $\mu$m liegt,
    der mittlere Durchmesser d der Oxidfasern in einem Querschnitt im rechten Winkel auf die Längsrichtung im Bereich von 1 bis 20 $\mu$m liegt und
    der Wert von W im Bereich von 10 bis 50 % liegt.

**Revendications**

1.  Structure en nid d'abeilles comprenant :

    une pluralité de segments en nid d'abeilles (11), séparés chacun par des cloisons (15) et comprenant une pluralité de trous de circulation pénétrant dans une direction axiale ; et
    une couche de liaison (12) existant entre les segments en nid d'abeilles adjacents (11) pour assembler la pluralité de segments en nid d'abeilles (11),
    dans laquelle la couche de liaison (12) est formée par l'utilisation d'un matériau de liaison comprenant des fibres d'oxyde, des particules inorganiques et un liant inorganique, les fibres d'oxyde satisfaisant l'expression relationnelle suivante (1),

    $$0{,}5 \leq L \times (W / D) / 100 \leq 8 \qquad (1)$$

    dans laquelle L est une longueur moyenne ($\mu$m) des fibres d'oxyde dans une direction longitudinale, D est la gravité spécifique (g/cm$^3$) des fibres d'oxyde et W est le pourcentage massique du contenu (% en masse) des fibres d'oxyde dans l'ensemble du matériau de liaison, et

dans laquelle la longueur moyenne L dans la direction longitudinale des fibres d'oxyde est dans la plage de 10 à 100 $\mu$m,

le diamètre moyen d des fibres d'oxyde dans une section transversale perpendiculaire à la direction longitudinale de celles-ci est dans la plage de 1 à 20 $\mu$m, et

la valeur de W est dans la plage de 10 à 50 %.

2.  Structure en nid d'abeilles selon la revendication 1,
    dans laquelle le pourcentage massique des fibres d'oxyde ayant une forme définie par $0{,}5 \leq$ (un diamètre d'une section transversale perpendiculaire à la direction longitudinale / (une longueur dans la direction longitudinale) $\leq 1$ est inférieur ou égal à 50 % en masse dans les fibres d'oxyde.

3.  Structure en nid d'abeilles selon la revendication 2,
    dans laquelle le pourcentage massique des fibres d'oxyde ayant la forme définie par $0{,}5 \leq$ (le diamètre de la section transversale perpendiculaire à la direction longitudinale / (la longueur dans la direction longitudinale) $\leq 1$ est inférieur ou égal à 10 % en masse.

4.  Structure en nid d'abeilles selon l'une quelconque de la revendication 1 à la revendication 3,
    dans laquelle le matériau de liaison comprend également un oxyde colloïdal.

5.  Structure en nid d'abeilles selon l'une quelconque de la revendication 1 à la revendication 4,
    dans laquelle la conductivité thermique de la couche de liaison est dans une plage de 0,1 à 5 W/m.K.

6.  Structure en nid d'abeilles selon l'une quelconque de la revendication 1 à la revendication 5,
    dans laquelle le segment en nid d'abeilles comprend un matériau composé de silicium-carbure de silicium comme ingrédient principal.

7.  Procédé de fabrication d'une structure en nid d'abeilles comprenant les étapes consistant à :

    former une pluralité de segments en nid d'abeilles (11) séparés chacun par des cloisons (15) et comprenant une pluralité de trous de circulation pénétrant dans une direction axiale ; et
    assembler la pluralité de segments en nid d'abeilles (11) grâce à l'utilisation d'un matériau de liaison (12) comprenant des fibres d'oxyde, des particules inorganiques et un liant inorganique, les fibres d'oxyde satisfaisant l'expression relationnelle suivante (1),

$$0{,}5 \leq L \times (W / D) / 100 \leq 8 \qquad (1)$$

    dans laquelle L est une longueur moyenne ($\mu$m) des fibres d'oxyde dans une direction longitudinale, D est la gravité spécifique (g/cm$^3$) des fibres d'oxyde, et W est le pourcentage massique du contenu (% en masse) des fibres d'oxyde dans l'ensemble du matériau de liaison, et
    dans laquelle la longueur moyenne L dans la direction longitudinale des fibres d'oxyde est dans la plage de 10 à 100 $\mu$m,
    le diamètre moyen d des fibres d'oxyde dans une section transversale perpendiculaire à la direction longitudinale de celles-ci est dans la plage de 1 à 20 $\mu$m, et
    la valeur de W est dans la plage de 10 à 50 %.

# FIG.1A

X AXIS DIRECTION

1B

10

12

11

1B

# FIG.1B

11

12

# FIG.2A

X AXIS DIRECTION

14
13
11
2B
2B

# FIG.2B

13
15

FIG.3A

12a

11A

FIG.3B

11B

11A

12a

FIG.3C

11B

11A

12

# FIG.4A

# FIG.4B

**EP 1 600 433 B1**

**REFERENCES CITED IN THE DESCRIPTION**

**Patent documents cited in the description**

- JP 3121497 B
- JP 2001162119 A
- JP 2002047070 A
- JP 2002085922 A